# EUROPEAN PATENT SPECIFICATION

(11) **EP 2 291 254 B1**
(45) Date of publication and mention of the grant of the patent: **12.02.2014**
(21) Application number: 08871459.7
(22) Date of filing: 05.12.2008
(51) Int. Cl.: B22D 17/00

(54) **METHOD OF MAKING A COMBUSTION TURBINE COMPONENT FROM METALLIC COMBUSTION TURBINE SUBCOMPONENT GREENBODIES**
VERFAHREN ZUR HERSTELLUNG EINES TURBINENTEILS AUS METALLISCHEN TURBINEN GRÜNKÖRPERTEILEN
PROCÉDÉ DE FABRICATION D'UN COMPOSANT DE TURBINE À COMBUSTION À PARTIR DE CORPS CRUS MÉTALLIQUES DE SOUS-COMPOSANT DE TURBINE À COMBUSTION

(30) Priority: 23.01.2008 US 22952; 26.09.2008 US 238774
(43) Date of publication of application: 09.03.2011
(73) Proprietor: Siemens Energy, Inc., Orlando, FL 32826-2399 (US); Mikro Systems Inc., Charlottesville, VA 22903 (US)
(72) Inventor: MORRISON, Jay, A., Oviedo FL 32765 (US); LANE, Jay, E., Mooresville IN 46158 (US); JAMES, Allister, W., Chuluota 32766 FL (US)
(74) Representative: McGowan, Nigel George
(86) International application number: PCT/US2008/013454
(87) International publication number: WO 2009/094012

(56) References cited:
- EP-A1- 1 707 873
- US-A1- 2005 036 893

## Description

### Field of the Invention

The present invention relates to the field of metallurgy, and, more particularly, to methods of making a combustion turbine component from a plurality of metallic combustion turbine subcomponent greenbodies.

### Background of the Invention

A combustion turbine typically includes, in a serial flow relationship, a compressor section to compress the entering airflow, a combustion section in which a mixture of fuel and the compressed air is burned to generate a propulsive gas flow, and a turbine section that is rotated by the propulsive gas flow. After passing through the turbine section, the propulsive gas flow exits the engine through a diffuser section. In ground based combustion turbines used for electricity generation, power is normally extracted from the rotating shaft to drive an electrical power generator.

A component of such a combustion turbine may advantageously be precisely formed and may take a variety of complicated shapes. Some current methods of combustion turbine component formation include casting and forging.

Casting is a manufacturing process by which a liquid metal is poured into a mold, typically ceramic, which contains a hollow cavity of the desired shape to be formed. The liquid metal is allowed to solidify and the solid combustion turbine component casting is then ejected or broken out of the mold to complete the process. There may, however, be limitations on the size of the combustion turbine components that may be formed by casting. Likewise, there may be limitations on the size of surface features of the combustion turbine components that may be formed (e.g. it may not be possible to form surface features having dimensions below a certain size).

Forging is the term for shaping metal by using localized compressive forces. A combustion turbine component formed by forging may be relatively strong and may have a fine grain structure. However, due to the fine grain structure, a forged combustion turbine component generally exhibits relatively low resistance to creep and may thus be unsuitable for use in certain applications Subsequent heat treatment can promote grain growth, however, and it is may be easier to control grain size in a forging than a casting. In addition, the formation of small surface features on such a combustion turbine component during the forging process may be difficult. Since forgings are generally solid shapes and cooling passages are later machined into the forging, it may be difficult to machine fine scale internal features on an internal surface of a cooling passage of a forging.

As discussed above, due to process limitations and cost concerns, forming an entire combustion turbine component of a desired shape and having desired surface features by the above processes may be difficult or costly. Thus, attempts at forming combustion turbine subcomponents and joining the subcomponents together to form a whole combustion turbine component have been made.

Some efforts have focused on welding. U.S. Pat. No. 7,337,940 to Subramanian et al., for example, discloses a method of manufacturing a combustion turbine component by friction stir welding a plurality of combustion turbine subcomponents together. The combustion turbine subcomponents are formed by conventional processes, such as casting or forging. However, some features may not be easily or cost effectively formed by casting or forging processes. In addition, some combustion turbine subcomponents may be constructed from materials that are not easily friction stir welded.

Other efforts at joining combustion turbine subcomponents together to form a combustion turbine component have instead focused on brazing. U.S. Pat. No. 6,434,946 to Shaw et al. discloses a method of making a combustion turbine component by bonding a brazing alloy to the surfaces of two combustion turbine subcomponents to be joined together and assembling the two combustion turbine subcomponents. The assembly is then heated to a brazing temperature to form a braze joint between the combustion turbine subcomponents, thereby forming the combustion turbine component. However, a braze joint may be undesirable in some situations and may not provide as strong a bond as desired.

In addition, the continuing effort to design and build more powerful and efficient combustion turbines has led to a desire for a component thereof to have enhanced high performance capabilities, such as heat transfer. Indeed, a component's ability to transfer heat away from itself is particularly important due to the high operating temperatures of combustion turbines.

Newton's Law of Cooling states that the rate of heat loss of a body is proportional to both the difference in temperatures between the body itself and its environment and the surface area of the body. Therefore, one way to enhance the cooling capabilities of a combustion turbine component is to increase its surface area.

U.S. Pat. Pub. 2008/0000611 to Bunker et al., for example, discloses a method of forming a casting mold that will be used to cast a combustion turbine component having a variety of surface cooling features, such as hemispheres, that increase the surface area of the combustion turbine component. The increased surface area provides the combustion turbine component with enhanced cooling capabilities. However, a combustion turbine component formed by casting and having an increased surface area may not be desirable in some applications. Furthermore, certain arrangements of surface cooling features may not be easily formed by casting techniques.

U.S. Pat. No. 6,503,574 to Skelly et al. discloses a method for making a combustion turbine component having cooling grooves defined therein. A combustion turbine component substrate is formed by single crystal casting techniques and then a bond coating is formed on the combustion turbine component substrate. A pattern of three-dimensional recessed grooves is etched in the bond coating by photolithography and then a thermal barrier coating is formed on the bond coating. However, recessed grooves may not provide the desired cooling capabilities in some applications. The use of a conventional polymer binder which is applied to the surfaces of subcomponents prior to assembly and co-sintering is disclosed in US patent number US 6,033,788.

Therefore, different methods of joining combustion turbine subcomponents together to form a combustion turbine component may be desirable. In addition, a combustion turbine component having increased surface area that is formed by joining a plurality of combustion turbine subcomponents together may also be desirable.

### Summary of the Invention

In view of the foregoing background, it is therefore an object of the present invention to provide a method of making a combustion turbine component by joining a plurality of combustion turbine subcomponents together.

This and other objects, features, and advantages in accordance with the present invention are provided by a method of making a combustion turbine component that may comprise assembling a plurality of metallic combustion turbine subcomponent greenbodies together to form a metallic greenbody assembly, and sintering the metallic greenbody assembly to thereby form the combustion turbine component. The assembling and sintering of the plurality of metallic combustion turbine subcomponent greenbodies to form the combustion turbine component may provide for better tolerance and shrinkage control of the resulting combustion turbine component than possible if finished combustion turbine subcomponents were assembled and joined together. In addition, this method advantageously provides a stronger bond between the plurality of metallic combustion turbine subcomponent greenbodies.

Each of the plurality of metallic combustion turbine subcomponent greenbodies is formed by direct metal fabrication (DMF). The DMF may comprise tomo lithographic molding. The DMF may also comprise metal injection molding. DMF advantageously allows for a greater variety of shapes to be formed than casting or forging. In addition, DMF allows the formation of smaller surface features than may be possible with conventional casting or forging processes.

An activatable binder is positioned between adjacent ones of the plurality of metallic combustion turbine subcomponent greenbodies. The activatable binder is be activated prior to sintering.

The combustion turbine component may be devoid of interfaces between adjacent ones of the plurality of metallic combustion turbine subcomponent greenbodies. Alternatively, the combustion turbine component may have interfaces between adjacent ones of the plurality of metallic combustion turbine subcomponent greenbodies.

Each of the plurality of metallic combustion turbine subcomponent greenbodies may comprise at least one of an oxide dispersion strengthened (ODS) alloy, an intermetallic compound, and a refractory metal. Such materials may be unusable with a conventional casting or forging process and may impart the combustion turbine component with various desirable properties.

At least one of the plurality of metallic combustion turbine subcomponent greenbodies may be formed to have a plurality of surface features, each with a dimension less than 200 µm. These surface features may provide the combustion turbine component with enhanced heat dissipation properties and high temperature resistance by increasing the surface area thereof. A large number of such small surface features may increase the surface area beyond what would be possible with larger surface features alone.

### Brief Description of the Drawings

FIG. 1 is a flowchart for a method of forming a combustion turbine component.
FIG. 2 is a more detailed flowchart for the method of forming a combustion turbine component.
FIG. 3 is another more detailed flowchart for the method of forming a combustion turbine component in accordance with the present invention.
FIG. 4 is a yet another flowchart for the method of forming a combustion turbine component in accordance with the present invention.
FIG. 5 is a cross sectional view of combustion turbine component having a plurality of surface cooling features in accordance with the present invention.
FIG. 6 is a greatly enlarged perspective view of the one of the surface cooling features of the combustion turbine component of FIG. 5.
FIG. 7 is a greatly enlarged perspective view of an alternative embodiment of a surface cooling feature for a combustion turbine component in accordance with the present invention.
FIG. 8 is a greatly enlarged schematic cross sectional view of yet another surface cooling feature for a combustion turbine component in accordance with the present invention.
FIG. 9 is a greatly enlarged schematic cross sectional view of still another surface cooling feature for a combustion turbine component in accordance with the present invention.
FIG. 10 is a greatly enlarged schematic cross sectional view of another surface cooling feature for a combustion turbine component in accordance with the present invention.
FIG. 11 is a greatly enlarged cross schematic sectional view of still another surface cooling feature for a combustion turbine component in accordance with the present invention.
FIG. 12 is flowchart of a method of forming a combustion turbine component having a plurality of surface cooling features in accordance with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

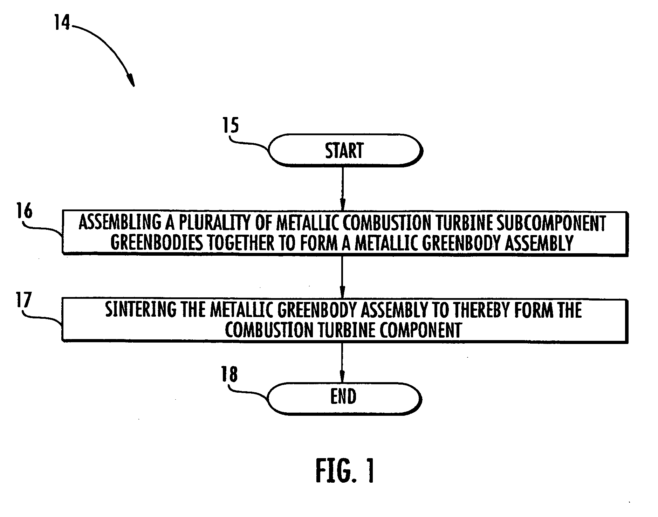

Referring initially to the flowchart **14** of FIG 1, a method of making a combustion turbine component which is not an embodiment of the invention is now described. After the start (Block **15**), at Block **16** a plurality of metallic combustion turbine subcomponent greenbodies are assembled together to form a metallic greenbody assembly. The metallic greenbody assembly has a shape closely resembling that of the final combustion turbine component, but has a greater porosity, a lesser density, and a larger size. The plurality of metallic combustion turbine subcomponent greenbodies may be assembled by conventional methods known to those of skill in the art.

Those of skill in the art will understand that a metallic combustion turbine subcomponent greenbody is an unsintered metallic combustion turbine subcomponent that lacks strength and has both a low density and high porosity compared to a sintered metallic body.

At Block **17**, the metallic greenbody assembly is sintered to thereby form the combustion turbine component. During sintering, the metallic greenbody assembly may shrink in all directions by up to 20%, thereby increasing in density. In addition, the porosity of the metallic greenbody assembly is reduced and the strength of the metallic greenbody assembly is increased.

The sintering may be solid state sintering or liquid state sintering. During solid state sintering, the metallic greenbody assembly is heated to a temperature below the melting point of its constituents and held at that temperature until its particles adhere to each other. During liquid state sintering, the metallic greenbody assembly is heated until at least one but not all of its constituents melt and reach a liquid state.

The metallic greenbody assembly may be placed under pressure during the sintering. In this case, the sintering may comprise hot isostatic pressing (HIP). HIP subjects a component to high gas pressure in a containment vessel. The pressurizing gas is preferably argon, although other inert gasses may be used as will be appreciated by those of skill in the art. The pressurizing gas is preferably applied between 100 and 310 MPa (15,000 p.s.i. and 45,000 p.s.i.) at a temperature of 480°C to 2000°C, although other pressures and other temperatures may be used as well. As the containment vessel is heated during the HIP, the pressure inside increases. The pressure is isostatic because it is applied to the metallic greenbody assembly from all directions evenly. The pressure and heat during HIP helps to reduce internal voids in the metallic greenbody assembly through a combination of plastic deformation, creep, and diffusion bonding, thus increasing the density of the metallic greenbody assembly. Alternatively, the sintering may be performed without the metallic greenbody assembly being placed under pressure. Block **18** indicates the end of the method.

After sintering, a bond coating may be formed on the combustion turbine component and a thermal barrier coating may be formed on the bond coating. Any number of exemplary bond coatings and thermal barrier coatings known to those of skill in the art may be used. In addition, the thermal barrier coating may be formed directly on the combustion turbine component, without an intervening bond coating. Additionally or alternatively, a wear resistant layer may be formed on the combustion turbine component.

Those of skill in the art will understand that, in some embodiments, after sintering the combustion turbine component may be placed into a casting mold and that additional metallic layers may therefore be formed around the combustion turbine component, encasing it.

In addition, it should be understood that a plurality of metallic combustion turbine subcomponent greenbodies may be assembled to form a metallic greenbody assembly and that the metallic greenbody assembly may be sintered to form a combustion turbine subcomponent assembly. Multiple combustion turbine subcomponent assemblies may be formed in this fashion and then joined together by conventional methods, such as welding or brazing, to form the combustion turbine component. The multiple combustion turbine subcomponent assemblies may also be placed into a casting mold and additional layers may be formed therearound to form a combustion turbine component

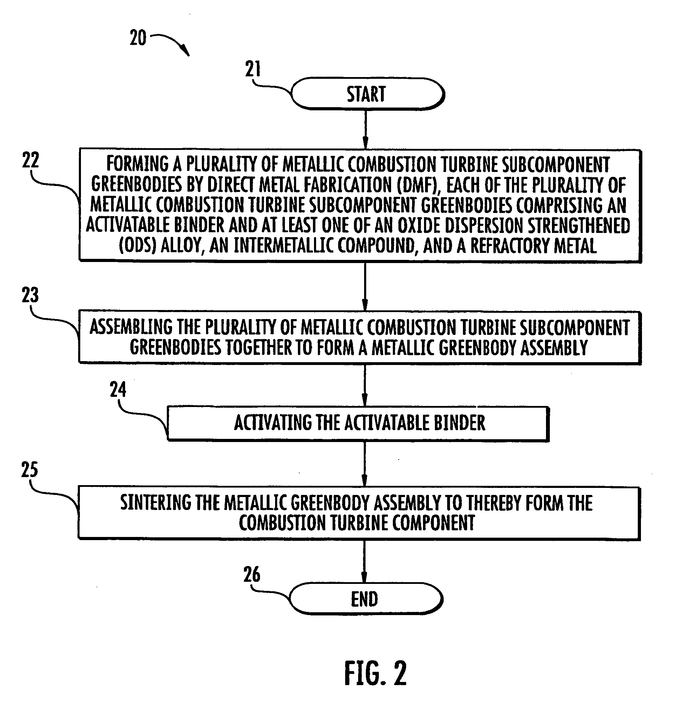

Referring now to the flowchart **20** of FIG. 2, a more detailed method of making a combustion turbine component which is not an embodiment of the invention is now described. After the start (Block **21**) at Block **22** a plurality of metallic combustion turbine subcomponent greenbodies are formed by direct metal fabrication (DMF).

Direct metal fabrication processes include (1) layered powder buildup processes, such as selective laser sintering (SLS), (2) processes using light energy to chemically change a material, such as stereolithography (SLA), (3) deposition techniques that selectively deposit either particles or thin laminates, such as solid ground curing (SGC), laminated object manufacturing (LOM), fused deposition modeling (FDM), and ballistic particle manufacturing (BPM), and (4) powder metallurgy processes that tightly compact a metal powder into a mold or die, such as metal injection molding (MIM) or tomo lithographic molding. SLS, for example, uses a high powered laser to fuse the particles of a metal powder into a mass representing a desired three dimensional object, one layer at a time.

The plurality of metallic combustion turbine subcomponent greenbodies may be formed by any of the above DMF processes, or by other processes known to those of skill in the art. In addition, each of the plurality of metallic combustion turbine subcomponent greenbodies may be formed by the same DMF process, or each may be formed by different DMF processes. For example, it may be advantageous for some of the metallic combustion turbine subcomponent greenbodies to be formed by SLA while others are formed by MIM.

Each of the plurality of metallic combustion turbine subcomponent greenbodies in this embodiment may comprise an activatable binder and at least one of an oxide dispersion strengthened (ODS) alloy, an intermetallic compound, and a refractory metal. Each of the plurality of metallic combustion turbine subcomponent greenbodies may also comprise a Nickel based superalloy and, optionally, at least one rare earth element. The activatable binder may comprise a polymer or plastic binder, a metallic mix including a melting point depressor, or another suitable binder known to those of skill in the art. Intermetallic compounds are solid phases containing two or more metallic elements, optionally having one or more non-metallic elements. Intermetallic phases form due to strong bonding between unlike metal atoms, this results in an ordered crystal structure, whereby the various atomic species occupy specific sublatice sites. Intermetallic compounds may also include interstitial compounds such as carbides and nitrides. Such intermetallic compounds offer advantageous properties like high temperature resistance and hardness. Refractory metals include tungsten, molybdenum, niobium, tantalum, and rhenium, and are extraordinarily resistant to heat and wear. The methods described herein allow the formation of combustion turbine components from the above materials, whereas conventional methods such as casting and forging may not. It should be noted that the plurality of metallic combustion turbine subcomponent greenbodies may be metallic and not contain any ceramic.

At Block **23,** the plurality of metallic combustion turbine subcomponent greenbodies are assembled together to form a metallic greenbody assembly. At Block **24,** the activatable binder is activated. The activatable binder may be activated by heating the greenbody assembly, or may be activated by other suitable methods. After activation, the activatable binder may optionally be cured through the use of a chemical agent, ultraviolet radiation, bombardment with an electron beam, or further heating. Furthermore, the activatable binder may optionally be removed from the greenbody assembly by a pre-sintering heat treating at a temperature of 400°C to 600°C, or at other suitable temperatures, or through the use of chemical agents. This pre-sintering heat treating, in some embodiments, may increase the density, decrease the porosity, and shrink the greenbody assembly.

At Block **25,** the metallic greenbody assembly is sintered to thereby form the combustion turbine component. Block **26** indicates the end of the method.

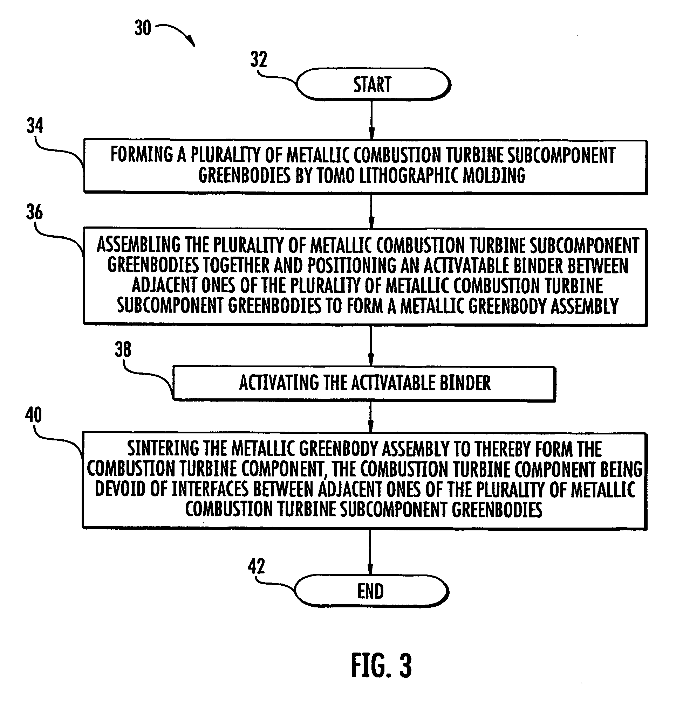

With reference to the flowchart **30** of FIG. 3, a method of making a combustion turbine component which is an embodiment of the invention is now described. After the start (Block **32**), at Block **34,** a plurality of metallic combustion turbine subcomponent greenbodies is formed by tomo lithographic molding. Tomo lithographic molding involves the production of a master tool which is then used either directly as a mold or die, or alternatively used to produce a secondary consumable mold. To create the master tool, a series of layers are fabricated with lithographic techniques. The layers are micro-machined to add additional features and details, and are then laminated together by brazing or epoxy bonding to form the master tool. The master tool may then be used as a mold or die for processes such as microcasting, microinjection molding, metal injection molding, and powder injection molding.

It should be understood that the term tomo lithographic molding as used hereinafter is to mean the use of a master tool formed by tomo lithographic molding in conjunction with a suitable process to form metallic combustion turbine subcomponent greenbodies therefrom.

At Block **36,** the plurality of metallic combustion turbine subcomponent greenbodies is assembled together and an activatable binder is positioned between adjacent ones of the plurality of metallic combustion turbine subcomponent greenbodies to form a metallic greenbody assembly. The activatable binder is a metallic mix together with a melting point depressor.

The activatable binder includes a melting point depressor. The sintering is liquid state sintering and the plurality of metallic combustion turbine subcomponent greenbodies are bonded together by transient liquid phase (TLP) bonding. The plurality of metallic combustion turbine subcomponent greenbodies is to be bonded together by TLP bonding. The activatable binder between each of the plurality of metallic combustion turbine subcomponent greenbodies is considered to be a TLP forming layer. The metallic greenbody assembly and thus the TLP forming layer are then heat treated at a temperature higher than the melting point of the TLP forming layer, but lower than the melting point of the other constituents of the metallic greenbody assembly. Accordingly, the TLP forming layer melts during the sintering.

As the temperature remains constant, the melting point depressor diffuses from the TLP forming layer into each of the plurality of metallic combustion turbine subcomponent greenbodies, and molecules from each of the plurality of metallic combustion turbine subcomponent greenbodies diffuse into the TLP layer. As a result of this diffusion, the melting point of TLP layer increases beyond the temperature of the heat treatment and the TLP layer, now close in composition to the plurality of metallic combustion turbine subcomponent greenbodies, resolidifies. The resulting bonded region between each of the plurality of metallic combustion turbine subcomponent greenbodies is thin and of a high strength.

Those of skill in the art will appreciate that the activatable binder may be positioned between certain adjacent ones of the plurality of metallic combustion turbine subcomponent greenbodies but not between other adjacent ones of the plurality of metallic combustion turbine subcomponent greenbodies.

At Block **38**, the activatable binder is activated. At Block **40**, the metallic greenbody assembly is sintered to thereby form the combustion turbine component. The combustion turbine component is devoid of an interface between adjacent ones of the plurality of metallic combustion turbine subcomponent greenbodies after sintering. This lack of interfaces may provide the combustion turbine component with increased strength and the metallurgical properties throughout may be consistent. Block **42** indicates the end of the method.

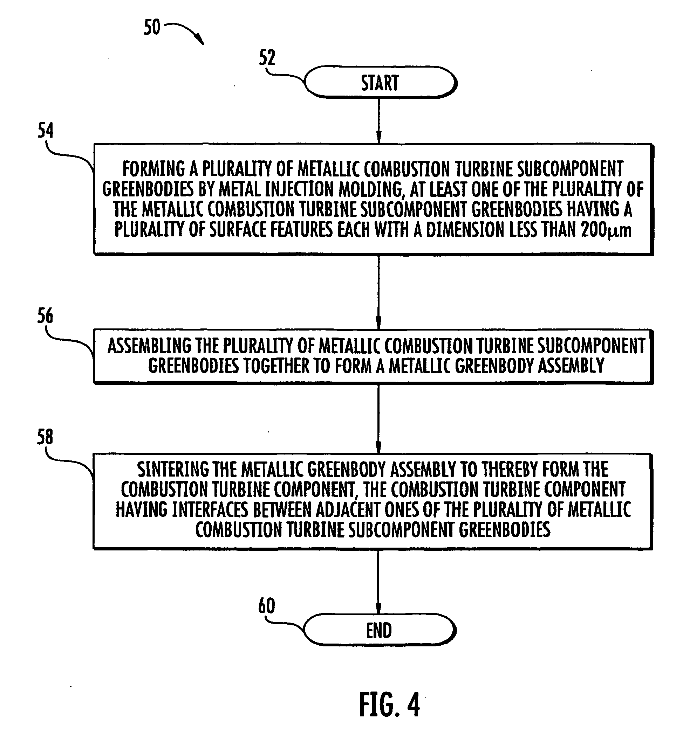

Another embodiment of a method of making a combustion turbine component is now described with reference to the flowchart **50** of FIG. 4. After the start (Block **52**), at Block **54** a plurality of metallic combustion turbine subcomponent greenbodies is formed by metal injection molding. Metal injection molding involves injecting a metallic powder and a suitable binder into a mold, in some situations with conventional plastic injection molding machines and processes. The mold used with the metal injection molding may be formed by tomo lithographic molding or may be formed from other methods.

At least one of the plurality of metallic combustion turbine subcomponent greenbodies is formed to have at least one internal cooling passage. This internal cooling passage is formed to have a plurality of internal surface features, each with a dimension less than 200µm. As will be explained in detail below, this plurality of internal surface features increases the internal surface area of the cooling passages of the combustion turbine component and therefore enhances its ability to transfer heat away from itself. As will also be explained in detail below, each of the plurality of internal surface features may take a variety of shapes and may be either a projection or a recess.

Of course, those of skill in the art will recognize that, in some applications, one of the metallic combustion turbine subcomponent greenbodies need not have internal cooling passages. In such applications, the surface features described herein may be external cooling features.

At Block **56,** the plurality of metallic combustion turbine subcomponent greenbodies is assembled together to form a metallic greenbody assembly. At Block **58,** the metallic greenbody assembly is sintered to thereby form the combustion turbine component. In this embodiment, the combustion turbine component has interfaces between adjacent ones of the plurality of metallic combustion turbine subcomponent greenbodies. Block **60** indicates the end of the method. Those of skill in the art will appreciate that, in some applications, there may be an interface between certain adjacent ones of the plurality of metallic combustion turbine subcomponent greenbodies after sintering and no interface between other adjacent ones of the plurality of metallic combustion turbine subcomponent greenbodies after sintering.

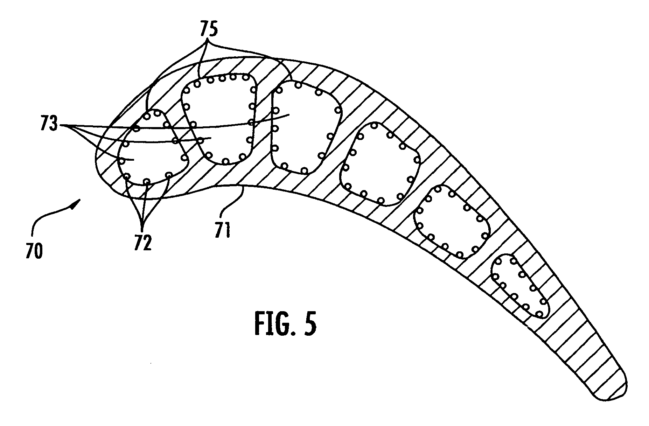

With reference to FIGS. 5-6, a combustion turbine component **70** having a plurality of internal surface cooling features **72** is now described. The combustion turbine component **70** comprises a metallic body **71** to define at least a substrate for the combustion turbine component, the metallic body having a plurality of internal cooling passages **73.** The internal cooling passages **73** each have an internal surface portion **75.**

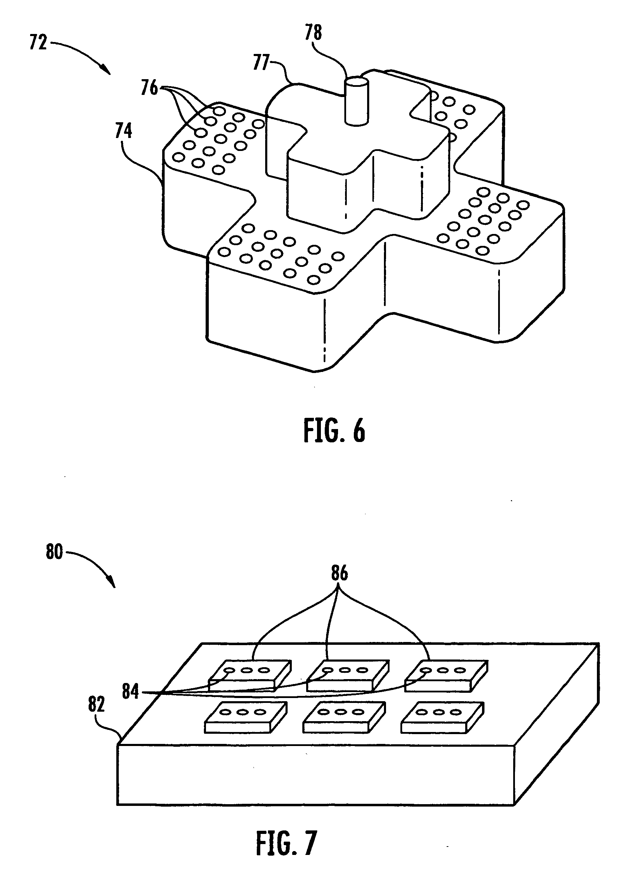

The internal surface portion **75** defines a plurality of coarse surface cooling features **74,** each having a dimension greater than 500µm. As perhaps best shown in FIG. 6, one of the plurality of coarse surface cooling features **74** illustratively comprises a three-tiered projection.

A plurality of fine surface cooling features **76** is on at least one of plurality of coarse surface cooling features **74,** each having a dimension less than 200µm. As also shown in FIG. 6, the plurality of fine surface cooling features **76** illustratively comprises convex or hemispherical projections, and may be on the order of 50µm, for example.

The surface cooling features described herein increase the surface area of the internal surface portion **75** of the combustion turbine component 70, thereby enhancing its ability to transfer heat away from itself and cool itself and into a cooling fluid flowing therethrough. This enhanced heat transfer may allow for the size of the cooling passageways **73** to be decreased compared to those of conventional combustion turbine components. Furthermore, this enhanced heat transfer may allow for an amount of cooling fluid used to cool the combustion turbine component **70** to be reduced.

A first additional surface cooling feature **77** comprising an "x" shaped projection is illustratively on the coarse surface cooling feature **74** and has a dimension greater than 200µm. It should be understood that, although one first additional cooling feature **77** is shown, there may instead be a plurality of first additional surface cooling features on at least one of the plurality of coarse surface cooling features **74** and that ones of this plurality of first additional surface cooling features may be of sizes both greater than and less than 200µm.

A second additional surface cooling feature **78** comprising a circular-base pin and having a dimension less than 200µm is illustratively on the first additional surface cooling feature **77.**

Those of skill in the art will recognize that there may be any number of stacked pluralities of surface cooling features (e.g. there may be a third plurality of additional surface cooling features on the second plurality of additional surface cooling features, and so on and so forth).

Each of the plurality of coarse surface cooling features **74,** plurality of fine surface cooling features **76,** first additional plurality of surface cooling features **77,** and second additional plurality of surface cooling features **78 may** be projections of other suitable shapes, including but not limited to square-base pins, circular-base pins, square-base pyramids, circular base cones, tapered pins, polygonal-based pyramids, conical frustums, pyramidical frustums, convex cones, serpentine ribs, hemispheres, and combinations thereof. Each of the plurality of coarse surface cooling features **74,** plurality of fine surface cooling features **76,** first additional plurality of surface cooling features **77,** and second additional plurality of surface cooling features **78** may also be recesses of various shapes, including but not limited to concave cones, dimples, concave hemispheres, serpentine ribs, square shaped recesses, circular shaped pin recesses, and combinations thereof. Each of the plurality of coarse surface cooling features **74,** plurality of fine surface cooling features **76,** first additional plurality of surface cooling features **77,** and second additional plurality of surface cooling features **78** may have the same shape, or each may have a different shape. For example, one of the plurality of fine surface cooling features **76** may be a convex hemispherical projection while another of the plurality of fine surface cooling features may be a concave square shaped recess.

The metallic combustion turbine component body **70** may comprise at least one of an oxide dispersion strengthened (ODS) alloy, an intermetallic compound, and a refractory metal. Advantages of construction from these materials are explained above. In addition, the metallic body **71** may comprise a plurality of metallic combustion turbine subcomponent bodies bonded together, or a plurality of metallic combustion turbine subcomponent greenbodies bonded together, by methods described in detail above.

An alternative embodiment of the surface cooling features in accordance with the present invention will now be described with reference to FIG. 7. One of a plurality of coarse surface cooling features **82** comprising a rectangular projection has a dimension greater than 500µm, and a plurality of fine surface cooling features **86** comprising rectangular projections and having at least one dimension less than 200µm is illustratively thereon. A first plurality of additional surface cooling features **84** comprising convex hemispheres and having at least one dimension less than 200µm, such as less than 50µm, is on the plurality of fine surface cooling features **86.**

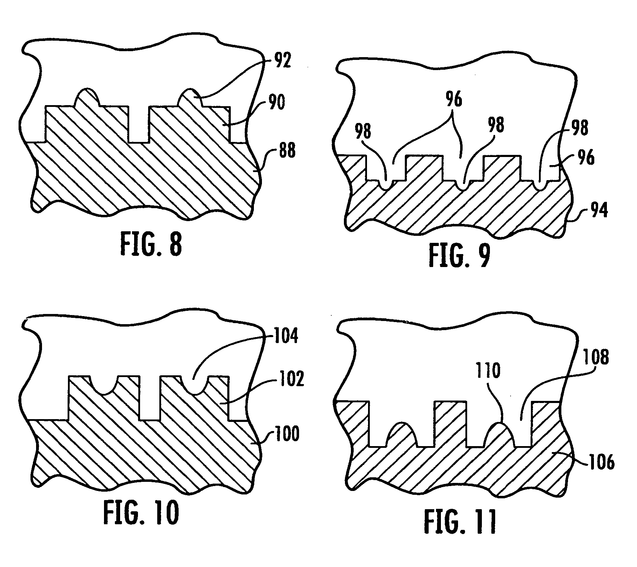

Various embodiments of the such surface cooling features in accordance with the present invention will now be described with reference to FIGS. 8-11. Referring first to FIG. 8, an internal surface portion of a cooling passage of an combustion turbine component **88** defines a plurality of coarse surface cooling features **90** comprising rectangular projections having a dimension, in this instance the width, that is greater than 500µm. A plurality of fine surface cooling features **92** comprising hemispherical projections and having a dimension, in this instance a diameter, that is less than 200µm is on the plurality of coarse surface cooling features **90.**

Referring now to FIG. 9, an internal surface portion of a cooling passage of a combustion turbine component **94** defines a plurality of coarse surface cooling features **96** comprising rectangular recesses having a dimension greater than 500µm. A plurality of fine surface cooling features **98** comprising concave hemispherical recesses having a dimension less than 200µm is defined in the plurality of coarse surface cooling features **98.**

Illustrated in FIG. 10 is an internal surface portion of a cooling passage of an combustion turbine component **100** defining a plurality of coarse surface cooling features **102** comprising rectangular projections having a dimension greater than 500µm. A plurality of fine surface cooling features **104** comprising concave hemispherical recesses having a dimension less than 200µm is defined in the plurality of coarse surface cooling featu res **102.**

Now referring to FIG. 11, an internal surface portion of a cooling passage of a combustion turbine component **106** defines a plurality of coarse surface cooling features **108** comprising rectangular recesses having a dimension greater than 500µm. A plurality of fine surface cooling features **110** comprising convex hemispheres and having a dimension less than 200µm is on the plurality of coarse surface cooling features **108.**

A method of making a combustion turbine component having a plurality of surface cooling features is now described. The method includes forming a metallic combustion turbine component body by direct metal fabrication (DMF). The metallic combustion turbine component body is formed to have at least one surface portion defining a plurality of coarse surface cooling features each having a first dimension. The metallic combustion turbine component body is also formed to have at least one fine cooling feature on at least one of the first plurality of surface cooling features and having a second dimension less than 200µm.

The first dimension may be greater than 500µm. There may be a plurality of fine surface cooling features on one of the plurality of coarse surface cooling features, or there may be a plurality of fine surface cooling features on each of the plurality of coarse surface cooling features.

The at least one fine surface cooling feature may comprise a projection or a convex projection. Alternatively, the at least one fine surface cooling feature may comprise a recess or a concave recess. If there are a plurality of fine surface cooling features, each of the plurality of fine surface cooling features may comprise the same shape, or may comprise different shapes (e.g. one of the plurality of fine surface cooling features may comprise a convex projection while another of the plurality of fine surface cooling features may comprise a concave recess).

One of the plurality of coarse surface cooling features may comprise a projection or a convex projection. In addition, one of the plurality of coarse surface cooling features may comprise a recess or a concave recess. Each of the plurality of coarse cooling features may be the same shape or each may be a different shape.

Additional details of the plurality of coarse surface cooling features and the at least one fine surface cooling feature may be found above. The DMF may comprise tomo lithographic molding or metal injection molding, details of which may also be found above.

The metallic body may comprise at least one of an oxide dispersion strengthened (ODS) alloy, an intermetallic compound, and a refractory metal. Advantageous properties of these materials are discussed above. The metallic body may additionally or alternatively comprise a nickel based superalloy and, optionally, at least one rare earth element.

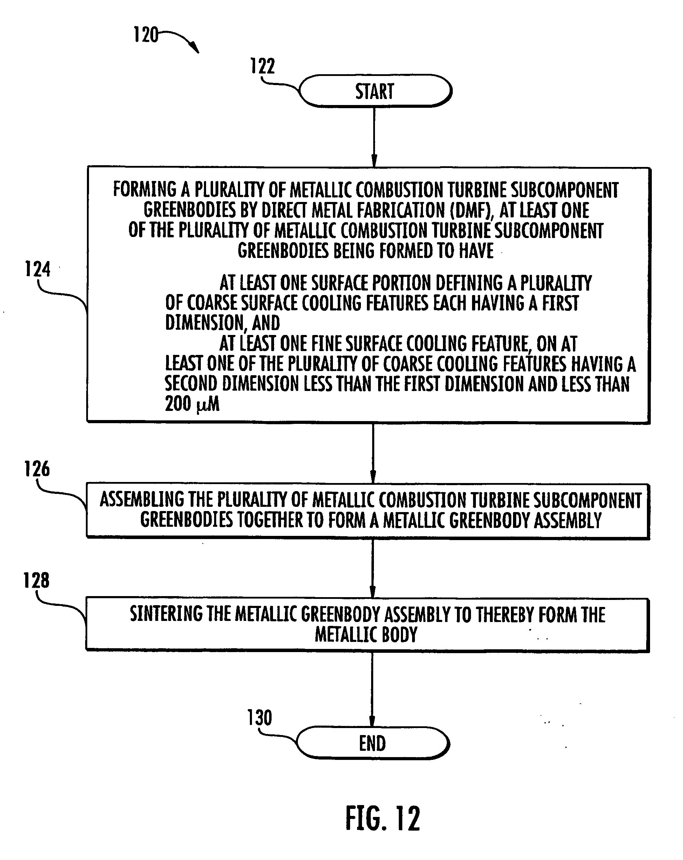

With reference to the flowchart **120** of FIG. 12, a more detailed method of forming a combustion turbine component having surface cooling features is now described. After the start (Block **122**), at Block **124** a plurality of metallic combustion turbine subcomponent greenbodies are formed by direct metal fabrication (DMF). At least one of the plurality of metallic combustion turbine subcomponent greenbodies is formed to have at least one surface portion defining a plurality of coarse surface cooling features each having a first dimension. In addition, the at least one of the plurality of metallic combustion turbine subcomponent greenbodies is formed to have at least one fine surface cooling feature on at least one of the plurality of coarse surface cooling features and having a dimension less than the first dimension and less than 200µm.

The plurality of metallic combustion turbine subcomponent greenbodies may comprise an activatable binder. The activatable binder may be activated prior to sintering.

At Block **126,** the plurality of metallic combustion turbine subcomponent greenbodies are assembled together to form a metallic greenbody assembly. At Block **128,** the metallic greenbody assembly is sintered to thereby form the metallic body. Block **130** indicates the end of the method. Further details of assembling and sintering may be found above.

## Claims

1. A method of making a combustion turbine component comprising:
forming each of a plurality of metallic combustion turbine subcomponent greenbodies by direct metal fabrication (DMF);
assembling the plurality of metallic combustion turbine subcomponent greenbodies together and positioning an activatable binder between adjacent ones of the plurality of metallic combustion turbine subcomponent greenbodies to form a metallic greenbody assembly, the activatable binder comprising a metallic mix together with a melting point depressor;
activating the activatable binder to perform transient liquid phase (TLP) bonding between the plurality of metallic combustion turbine subcomponent greenbodies of the metallic greenbody assembly, wherein the step of activating comprises heat treating the metallic green body assembly at a temperature higher than the melting point of the activatable binder but lower than the melting point of the plurality of metallic combustion turbine subcomponent greenbodies; and
following the step of activating, liquid state sintering the metallic greenbody assembly including the activatable binder to thereby form the combustion turbine component.

2. The method of Claim 1 wherein the DMF comprises tomo lithographic molding.

3. The method of Claim 1 wherein the DMF comprises metal injection molding.

4. The method of Claim 1 wherein the combustion turbine component is devoid of interfaces between adjacent ones of the plurality of metallic combustion turbine subcomponent greenbodies after sintering.

5. The method of Claim 1 wherein each of the plurality of metallic combustion turbine subcomponent greenbodies comprises at least one of an oxide dispersion strengthened (ODS) alloy, an intermetallic compound, and a refractory metal.

6. The method of Claim 1 wherein at least one of the plurality of metallic combustion turbine subcomponent greenbodies has a plurality of surface features each with a dimension less than 200 µm.

## Patentansprüche

1. Verfahren zur Herstellung einer Verbrennungsturbinenkomponente, welches umfasst:
Ausbilden jedes von einer Vielzahl metallischer Verbrennungsturbinen-Teilkomponenten-Grünkörper durch Direct Metal Fabrication (DMF);
Zusammenbauen der Vielzahl metallischer Verbrennungsturbinen-Teilkomponenten-Grünkörper und Positionieren eines aktivierbaren Bindemittels zwischen benachbarten von der Vielzahl metallischer Verbrennungsturbinen-Teilkomponenten-Grünkörper, um einen metallischen Grünkörperverbund zu bilden, wobei das aktivierbare Bindemittel ein metallisches Gemisch zusammen mit einem Schmelzpunktsenker umfasst;
Aktivieren des aktivierbaren Bindemittels, um Transient Liquid Phase Bonding (TLP-Bonding) zwischen der Vielzahl metallischer Verbrennungsturbinen-Teilkomponenten-Grünkörper des metallischen Grünkörperverbundes durchzuführen, wobei der Schritt des Aktivierens das Wärmebehandeln des metallischen Grünkörperverbundes bei einer Temperatur umfasst, die höher als der Schmelzpunkt des aktivierbaren Bindemittels, jedoch niedriger als der Schmelzpunkt der Vielzahl metallischer Verbrennungsturbinen-Teilkomponenten-Grünkörper ist; und
im Anschluss an den Schritt des Aktivierens, Flüssigsintern des das aktivierbare Bindemittel enthaltenden metallischen Grünkörperverbundes, um dadurch die Verbrennungsturbinenkomponente zu bilden.

2. Verfahren nach Anspruch 1, wobei die DMF Tomo-Lithographic Molding umfasst.

3. Verfahren nach Anspruch 1, wobei die DMF Metallspritzformen umfasst.

4. Verfahren nach Anspruch 1, wobei die Verbrennungsturbinenkomponente nach dem Sintern frei von Grenzflächen zwischen benachbarten von der Vielzahl metallischer Verbrennungsturbinen-Teilkomponenten-Grünkörper ist.

5. Verfahren nach Anspruch 1, wobei jeder von der Vielzahl metallischer Verbrennungsturbinen-Teilkomponenten-Grünkörper mindestens eines von einer oxiddispersionsverfestigten (ODS) Legierung, einer intermetallischen Verbindung und einem Refraktärmetall umfasst.

6. Verfahren nach Anspruch 1, wobei mindestens einer von der Vielzahl metallischer Verbrennungsturbinen-Teilkomponenten-Grünkörper eine Vielzahl von Oberflächenstrukturelementen mit einer Abmessung von jeweils weniger als 200 µm aufweist.

## Revendications

1. Procédé de fabrication d'un composant de turbine à combustion consistant :
à réaliser chaque corps cru d'une pluralité de corps crus métalliques formant sous-composants de turbine à combustion par fabrication directe de pièces métalliques (DMF) ;
à assembler la pluralité de corps crus métalliques formant sous-composants de turbine à combustion les uns avec les autres et à positionner un liant activable entre des corps crus adjacents parmi la pluralité de corps crus métalliques formant sous-composants de turbine à combustion pour réaliser un assemblage de corps crus métalliques, le liant activable comprenant un mélange métallique associé à un abaisseur de point de fusion ;
à activer le liant activable pour exécuter une liaison en phase liquide transitoire (TLP) entre la pluralité de corps crus métalliques formant sous-composants de turbine à combustion de l'assemblage de corps crus métalliques, l'étape d'activation consistant à traiter à chaud l'assemblage de corps crus métalliques à une température supérieure au point de fusion du liant activable, mais inférieure au point de fusion de la pluralité de corps crus métalliques formant sous-composants de turbine à combustion, et
après l'étape d'activation, à fritter à l'état liquide l'assemblage de corps crus métalliques comprenant le liant activable pour réaliser le composant de turbine à combustion.

2. Procédé selon la revendication 1 dans lequel la DMF consiste en un moulage tomo-lithographique.

3. Procédé selon la revendication 1 dans lequel la DMF consiste en un moulage par injection de métal.

4. Procédé selon la revendication 1 dans lequel le composant de turbine à combustion est dépourvu d'interfaces entre les corps crus adjacents parmi la pluralité de corps crus métalliques formant sous-composants de turbine à combustion après frittage.

5. Procédé selon la revendication 1 dans lequel chaque corps cru de la pluralité de corps crus métalliques formant sous-composants de turbine à combustion comprend au moins soit un alliage renforcé par dispersion d'oxydes (ODS), soit un composé intermétallique, soit un métal réfractaire.

6. Procédé selon la revendication 1 dans lequel au moins un corps cru parmi la pluralité de corps crus métalliques formant sous-composants de turbine à combustion comporte une pluralité de détails superficiels ayant chacun une dimension inférieure à 200 µm.
